# EUROPEAN PATENT APPLICATION

(11) **EP 2 806 600 A1**
(43) Date of publication of application: **26.11.2014**
(21) Application number: 11878470.1
(22) Date of filing: 26.12.2011
(51) Int. Cl.: H04L 12/26

(54) **PROTECTION METHOD AND DEVICE**

(71) Applicant: Keelwit Technology & Beyond S.L., 28020 Madrid (ES); Laiseca Technologies S.L., 28020 Madrid (ES)
(72) Inventor: REYES GONZÁLEZ, Joaquín Diego, E-28020 Madrid (ES); LAISECA SEGURA, Sebastián, E-28028 Madrid (ES); PRADA Y NOGUEIRA, Isaac, E-28020 Madrid (ES); CANCER ABÓITIZ, José María, E-28020 Madrid (ES)
(74) Representative: Elzaburu S.L.P.
(86) International application number: PCT/ES2011/070905
(87) International publication number: WO 2013/098424

(57) **Abstract**

A protection device (11) against denial-of-service attacks by flooding; where it is connected to a transport telecommunications network, with a firewall (12) or not, of a system of computers; the protection device (11) comprises an analysing means which analyses both the packets and their headers, transported by the transport network. The analysing device is capable of detecting the similarity, or not, of each packet, and if the values coincide, the analysed packet is rejected.

## Description

### PURPOSE OF THE INVENTION

This invention refers to a protection device and method against denial-of-service, DoS, due to the flooding of a system of computers connected to a telecommunications network.

### STATE OF THE ART

Multiple computers are connected to transmit data over a telecommunications network of the internet type to transport data packets over communications channels between computers connected to the ends of communications channels established in the network.

The computers are associated with an IP address respectively, such that each IP packet transmitted over the transport network includes a source and destination address in order to enable them to be directed correctly.

Intruders or attackers who wish to make a flood attack against a certain computer with a certain IP address send a large number of packets requesting connection with the aim of saturating the computer's ports with the flow of information, meaning that the computer becomes overloaded and, consequently, cannot continue providing services, hence it is known as "denial", as it means that the computer cannot manage the request packets from users, resulting in a service or resource being inaccessible to legitimate users.

Therefore, the attacked computer denies service to legal users, with this technique being known as a Denial of Service, DoS, attack due to service saturation.

The traffic generated by the attacking computers appears to be legal traffic in the transport layer and filtering it effectively with a firewall is complex without using 100% of its resources.

Consequently, there is a need to reduce denials of service to legitimate users in a computer.

### SUMMARY

This invention seeks to resolve one or more of the problems stated above by means of a protection device against denial-of-service due to saturation of a system of computers connected to a telecommunications network as defined in the claims.

One aspect is to provide a protection device that identifies or recognises malicious data packets associated with attacks of the saturation attack type, such that the protection device recognises and protects computers from denial-of-service by saturation attacks by rejecting or transmitting incoming and outgoing IP packets, according to certain rules.

Another aspect is to provide a protection device that prevents the overloading of a publicly-available system of computers and also prevents denial-of-service to legal users.

A further aspect is to provide a protection device that prevents the saturation of the attacked system's bandwidth and, furthermore, prevents consumption of all the resources of the system of computers.

Yet another aspect is to supply a computer protection device against a saturation attack from a computer. The protection device is connected on the network side to multiple computers by means of a data packet transport network and on the client side to a computer or computer network subject to attack, with it being possible to connect the computers to the protection device through a firewall.

Yet another aspect is to provide a protection device comprising at least one device of the FPGA (Field Programmable Gate Array) programmable general-purpose logical device type, composed of logical blocks with programmable interconnects.

A further aspect is to supply a protection device without an assigned or set IP address which, therefore, cannot be attacked from the network side because it is a device which cannot be addressed as it does not comprise or have an IP address.

Yet another aspect is to supply a protection device capable of analysing the headers of data packets received from the network side, the destination of which is a computer connected downstream of the protection device and of rejecting data packets that include the same request, i.e. repetitive packets.

A further aspect is to supply a protection device comprising at least two FPGA devices connected in cascade and with negative feedback.

### BRIEF DESCRIPTIONS OF THE FIGURES

A more detailed explanation of the device in accordance with the embodiments of the invention is given in the following description based on the attached figures, in which:
Figure 1a shows a simplified block diagram of a telecommunications network connected to a protection device and a computer network;
Figure 1b shows a simplified block diagram of the telecommunications network connected to a protection device and to the computer network through a firewall;

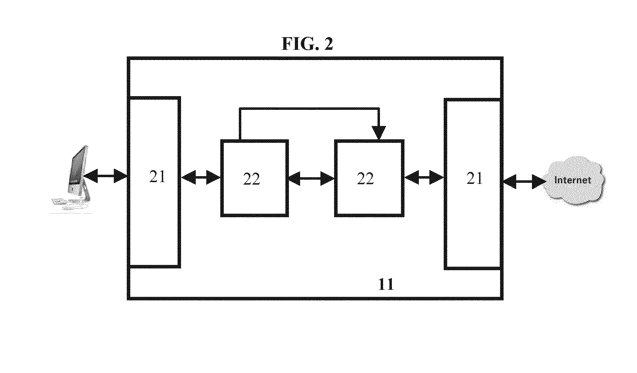

Figure 2 shows a simplified block diagram of the protection device comprising two FPGA devices connected in cascade and with negative feedback.

### DESCRIPTION OF A FORM OF EMBODIMENT

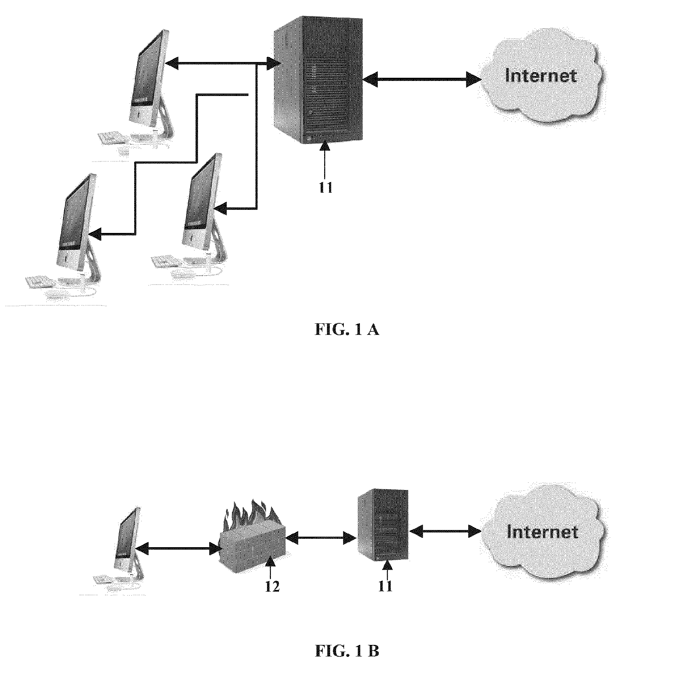

In relation to Figures 1a and 1b, a protection device 11 is illustrated for computers connected downstream of the protection device 11, in this case through a firewall 12, where the computers can be connected directly to the protection device 11. The protection device 11 provides protection to the computers against saturation attacks from the network side. The system of computers includes a computer, a router, a server, etc.

The protection device 11 can be connected, on the network side, by means of an Ethernet line to a telecommunications network to transport data packets of the IP datagram type and, on the client side, it can be connected by means of an Ethernet line also to a system of computers or computer network to recognise and identify IP data packets received from an attacking sending user, the destination of which is a computer connected downstream of the protection device 11.

Therefore, the protection device 11 receives all the IP data packets for which the target is located downstream of the protection device 11 and, consequently, the protection device 11 is adapted to check the headers of IP data packets with targets beyond or downstream of the protection 11.

In a scenario in which a saturation attack takes place, a target computer receives multiple packets, namely IP data packets, from at least one source computer which can be connected to the target computer over the transport network.

The IP packets received by the target computer share the same destination, the same length, though they may differ in their source IP address, and are of the same type, namely the same packet repeated a large number of times over a certain period of time.

The protection device 11 is configured to receive the repeated packets by means of an input/output interface 21 which redirects the IP data packets to an analysis unit or analyser configured to check the headers of the IP data packets received.

The checking stage comprises the identification of repetition in the IP data packets received, i.e. the IP data packet headers is analysed to check whether it corresponds to a packet repeated in a predetermined period of time.

The analyser calculates the checksum of the IP data packet received and the calculated value is compared to the checksum value calculated relating to an IP packet received previously. If the comparison is affirmative or positive, the coincidence of the source and destination are also checked. If the parameters analysed coincide, the packet studied is rejected.

If there is no coincidence in any of the parameters analysed, the packet analysed is sent via the firewall 12, if one exists, or directly from the input/output interface 21 to the computer network.

The checksum is a form of checking whether the headers of at least two IP data packets received coincide or are different.

As mentioned previously, saturation attacks occur when an anomalously large number of equal or similar packets are received, for example of the IP SYN packet type, namely the same information but with a different source/destination. Consequently, the probability that the checksum for these IP data packets is equal is very high.

The analyser rejects those IP data packets corresponding to the IP SYN request packet type with equal checksum values. In the aforementioned scenario the IP data packets received may be associated with malicious packets relating to a possible saturation attack.

One effect of the form of action of the protection 11 is to reduce the number of packets the target computer will receive, preventing the computer or the system of computers itself from becoming saturated due to needing to attend to an anomalously large number of packets in a short period of time.

In summary, the system of computers and/or one of the network computers is protected against a denial-of-service by saturation attack. Additionally, the protection 11 helps to prevent the loss of connectivity of the computer network victim of the attack due to consumption of the bandwidth available in the network itself. Furthermore, the protection 11 collaborates in reducing the loading on the computing resources of the system which is the victim of an attack. In other scenarios saturation attacks may cause poor operation of the attacked computer, but not its disconnection from the transport network.

Consequently, the protection 11 carries out a filtering stage in which a number of IP data packets may be rejected depending on a rejection policy executed by the protection device 11. It must be noted that during a saturation attack there is no diversity in IP packets.

In a scenario in which the checksum is different, the detection device determines that the packet received and analysed cannot be associated with a saturation attack and, therefore, the IP data packet analysed can be associated with normal data traffic. The analysed packet is transmitted to the target computer.

The rejection policy applied by the protection 11 is a function of the bandwidth occupied at each moment, of the number of packets received per unit of time, of the type of firewall 12 connected between the protection 11 and the computer network.

The rejection policy is variable depending on the aforementioned parameters, i.e. if there is high occupation of the bandwidth, the rejection policy determines that the protection device 11 raises the number of similar IP packets rejected.

A protection device 11 manager can modify the threshold values for the bandwidth occupied and the number of packets received by the protection 11 from which malicious request packets may be rejected in order to provide optimal network traffic, dimensioned to the network infrastructure, for example, to keep the computer network connected to the transport network, although the operation of the network itself will not be optimal.

The procedure for protection against saturation attacks described above can also be applied to protect a computer network against distributed denial-of-service attacks by saturation, DDoS.

It must be noted that the firewall 12 connected between the protection device 11 and the computers receives IP data packets not rejected by the protection 11 and, consequently, these IP packets cannot affect the system of computers. Additionally, the firewall 12 then decides what IP data packets received from the protection 11 are rejected or supplied to the computer network.

The input/output interface 21 comprises at least one Ethernet connector and one USB connector. An electricity supply source, of the battery, rechargeable battery, power supply or similar type, powers the protection device 11.

The protection procedure for a system of computers may be executed by a computer, and is loadable into the internal memory of a computer with input and output units and, also, with processing units.

For this purpose, the computer program comprises codes configured to execute the aforementioned process when it is executed by the computer. In addition, the executable codes can be recorded in a computer-readable carrier medium.

## Claims

1. **A protection device** against denial-of-service attacks by flooding; **characterised in that** the protection device (11) is adapted to be connected, without having an assigned IP address, to a transport telecommunications network that transports data packets to a computer; where the protection device (11) comprises an analyser device adapted to analyse the headers of data packets received from the transport network; the analyser device is adapted to calculate the checksum value for a packet of data received; to store the calculated checksum value; to calculate the checksum value for a packet of data received subsequently, where this subsequent packet of data can be rejected if its checksum coincides with the stored checksum value and the subsequent data packet is of the same type as the data packet received previously.

2. **A device** according to claim 1; where the analyser device is adapted to reject a subsequent data packet, the checksum value of which coincides with the stored checksum value based on a rejection policy applied by the analyser device; where the rejection policy is a function of the bandwidth occupied at each moment and of the number of packets received per unit of time.

3. **A device** according to claim 2; where the analyser device is adapted also to reject a subsequent data packet based on the type of firewall (12) that can be connected between the protection device (11) and at least one computer.

4. **A device** according to claim 1; where the analyser device is adapted to analyse the header of the received data packets at a low level, in the physical layer.

5. **A device** according to claim 1; where the protection device (11) is an FPGA general-purpose programmable logical device composed of logical blocks with programmable interconnects (22).

6. **A device** according to claim 5; where the protection device (11) includes at least two FPGA logical devices (22) connected in cascade and with negative feedback.

7. **A method** of protection against denial-of-service attacks by flooding; **characterised in that** the method comprises the stages of:
• Analysing, by means of an analyser device, the headers of data packets received from a data packet transport telecommunications network, which can be transported to at least one computer;
• Calculating, by means of an analysing device, the checksum value for a data packet received; storing the calculated checksum value;
• Calculating, by means of an analysing device, the checksum value for a data packet received subsequently; where this subsequent data packet can be rejected if its checksum value coincides with the stored checksum value and the subsequent data packet is of the same type as the data packet received previously.

8. **A method** according to claim 7; where the method also comprises a stage for rejecting a subsequent data packet, the checksum value of which coincides with the stored checksum value based on a rejection policy applied by the analyser device; where the rejection policy is a function of the bandwidth occupied at each moment and of the number of packets received per unit of time.

9. **A method** according to claim 8; where the method also comprises a stage for rejecting a subsequent data packet based on the type of firewall (12) that can be connected between the protection device (11) and at least one computer.

10. **A computer program** that can be loaded into the internal memory of a computer with unit input and output and a processing unit, when the program is composed of executable code configured to carry out the steps necessary for any of claims 7 to 9 when executed in the computer.

11. **The computer program** of claim 10, recordable in computer readable media.

## Amended claims

### Amended claims under Art. 19.1 PCT

**1. A protection device** against denial-of-service attacks by flooding; **characterised in that** the protection device (11) is adapted to be connected to a transport telecommunications network and a computer; where the protection device (11) comprises an analyser device adapted to analyse the headers of data packets received from the transport network; adapted to analyse the header of packets carried by the transport network and should match the header, the analysed package may be rejected if both are the same type.

**2. Device** according to claim 1; where the analyser device is adapted to calculate the checksum value of a first package and store the calculated checksum value, a subsequent package may reject if their checksum value matches.

**3. Device** according to claim 1; where the protection device (11) is adapted also to reject a data packet whose checksum value matches the checksum value stored on the basis of a policy of rejection applied by the analyser device, being the policy of rejection function occupied bandwidth at each instant, the number of packets received per unit time, and the computer network.

**4. Device** according to claim 1; where the protection device (11) is a general-purpose programmable logical device composes of logical blocks with FPGA programmable interconnects (22).

**5. Device** according to claim 4; where the protection device (11) includes at least two FPGA logical devices (22) connected in cascade and with negative feedback.

**6. A method** of protection against denial-of-service attacks by flooding; **characterised in that** the method comprises the stages of:
• Analysing the headers of data packets received from a data packet transport telecommunications network to a protection device (11),
• Analysing the headers of the transported packet in order to find matches between them,
• Calculating the checksum value for the data packet analysed if the package analysed is the same type; and
• Rejecting the data packet analysed if its checksum value calculated coincides with a stored checksum value and is the same type and have the same header.

**7. Method** according to claim 6; where the method comprises furthermore a step for calculating the checksum value a subsequent packet to the first data packet and, in case of coincidence of checksum values, subsequent packet is rejected.

**8. Method** according to claim 7; where the method comprises furthermore a step for rejecting a data packet whose checksum value coincides with the stored checksum value on the basis of a policy of rejection applied by the analyser device, being the policy of rejection function occupied bandwidth at each instant, the number of packets received per unit time, and the type of firewall (12) connects between the protection device (11) and the computer network.

**9. A computer program** that can be loaded into the internal memory of a computer with unit input and output and a processing unit, when the program is composed of executable code configured to carry out the steps necessary for any of claims 6 to 8 when executed in the computer.

**10. The computer program** of claim 10, recordable in computer readable media.
